# EUROPÄISCHE PATENTANMELDUNG

(11) **EP 3 249 619 A1**
(43) Veröffentlichungstag der Anmeldung: **29.11.2017**
(21) Anmeldenummer: 17171280.5
(22) Anmeldetag: 16.05.2017
(51) Int. Cl.: G07F 7/06, B02C 18/22, B02C 19/00

(54) **LEERGUT-TRANSPORTSYSTEM UND LEERGUT-RÜCKNAHMESYSTEM ZUR ABSAUGUNG VON GEBINDEN**

(30) Priorität: 17.05.2016 DE 102016109012
(71) Anmelder: Wincor Nixdorf International GmbH, 33106 Paderborn (DE)
(72) Erfinder: SCHRÖDER, Berthold, 98693 Ilmenau (DE)
(74) Vertreter: Viering, Jentschura & Partner mbB Patent- und Rechtsanwälte

(57) **Zusammenfassung**

Ein Leergut-Transportsystem weist auf eine Luftstrom-Transportvorrichtung (3) mit einer Leergut-Transportrohrleitung (9), welche eine erste Anschlussstelle (13-1, 13-2) zum Anschluss an den Leergutrücknahmeautomaten (15-1, 15-2) und eine zweite Anschlussstelle (17) zum Anschluss an den Leergut-Sammelbehälter (19) aufweist, und eine Luftstrom-Erzeugungsvorrichtung (11), welche an die Leergut-Transportrohrleitung (9) angeschlossen und eingerichtet ist, um in der Leergut-Transportrohrleitung (9) einen Transport-Luftstrom (L) bereitzustellen, mittels dessen das Leergut, das über die erste Anschlussstelle (13-1, 13-2) vom Leergutrücknahmeautomaten (15-1, 15-2) in die Leergut-Transportrohrleitung (9) gelangt, zum Leergut-Sammelbehälter (19) zu bewegen, eine Luftschleuseneinrichtung (5-1, 5-2), welche an der ersten Anschlussstelle (13) angeordnet ist und über welche das Leergut vom Leergutrücknahmeautomaten (15-1, 15-2) an die Leergut-Transportrohrleitung (9) überführbar ist.

## Beschreibung

Die Erfindung betrifft ein Leergut-Transportsystem und ein Leergut-Rücknahmesystem zur Leergutrücknahme und zum automatischen Transport von Leergut von einem Leergutrücknahmeautomaten zu einem Leergut-Sammelbehälter.

Leergut, welches z.B. in Form von Gebinden vorliegt, wie z.B. Einwegflaschen, beispielsweise Kuststoffflaschen wie beispielsweise PET-Flaschen (PET: Polyethylenterephthalat), und Dosen, beispielsweise Aluminiumdosen, für Getränke, wird von Verbrauchern mittels Leergutrücknahmeautomaten, welche z.B. in Supermärkten aufgestellt sind, zurückgegeben. Herkömmliche Leergutrücknahmeautomaten sammeln das zurückgegebene Leergut z.B. in Säcken, welche dann manuell von Mitarbeitern der Leergutrücknahmestelle gegen neue, leere Säcke ausgetauscht und zu einem Leergut-Sammelbehälter zum Abtransport verbracht werden. Jedoch ist der Austausch der Säcke der Leergutrücknahmeautomaten und deren Verbringen in den Leergut-Sammelbehälter zeitaufwendig und führt aufgrund der Freiform der Säcke zu einer schlechten Raumausnutzung im Leergut-Sammelbehälter. Zudem stehen die Leergutrücknahmeautomaten während des Austauschs der Säcke für die Verbraucher nicht zur Verfügung. Auch sind die mit dem Leergut gefüllten Säcke schwer und unhandlich zu transportieren, werden jedoch herkömmlich von einer Person eine nicht zu vernachlässigende Wegstrecke getragen (in verschiedenen Supermärkten bis zu einigen hundert Metern weit), was hinsichtlich der Arbeitsergonomie nachteilig ist.

Es werden ein Leergut-Transportsystem und ein Leergut-Rücknahmesystem geschaffen, welche eine Rücknahme und einen automatischen Transport von Leergut, welches z.B. in wie oben beschriebener Form vorliegt, von einem Leergutrücknahmeautomaten zu einem Leergut-Sammelbehälter bei z.B. gleichzeitig effizienter Raumausnutzung des Leergut-Sammelbehälters ermöglichen.

Es werden ein Leergut-Transportsystem gemäß Anspruch 1 und ein Leergut-Rücknahmesystem gemäß Anspruch 6 bereitgestellt. Weitere Ausführungsformen des Leergut-Transportsystems und des Leergut-Rücknahmesystems sind in den jeweiligen abhängigen Ansprüchen beschrieben.

Ein Leergut-Transportsystem gemäß einer beispielhaften Ausführungsform kann zum automatischen Transport von Leergut von einem Leergutrücknahmeautomaten zu einem Leergut-Sammelbehälter (z.B. einem Transport- oder Recyclingcontainer) verwendet werden, wobei das Leergut einzelne, zumindest im Wesentlichen vollständig entleerte Getränkebehälter (z.B. eine Einwegflasche, beispielsweise eine PET-Flasche oder eine Getränkedose, beispielsweise aus Aluminium oder Weißblech), eine Mehrzahl von Getränkebehältern oder einzelne Komponenten eines/mehrerer Getränkebehälter (z.B. zerkleinertes Leergut) sein kann. Das heißt, zum Transport im Leergut-Transportsystem kann das Leergut unverändert, d.h. in seiner ursprünglichen Form, verdichtet (z.B. gepresst) oder kompaktiert (z.B. mehrfach in verschiedenen Raumrichtungen gepresst) vorliegen. Der Leergutrücknahmeautomat kann in einer Leergutrücknahmestelle, beispielsweise in einem Supermarkt oder in einem Getränkemarkt, aufgestellt sein, sodass Verbraucher manuell Leergut in diesen einführen können. Das abgegebene Leergut wird über das Leergut-Transportsystem zum entfernt aufgestellten (z.B. mehrere Meter bis hundert Meter oder mehrere hundert Meter) Leergut-Sammelbehälter zur Weiterbeförderung an eine Recycling-/Verwertungsstelle transportiert und dort gesammelt.

Das Leergut-Transportsystem kann eine Leergut-Transportrohrleitung aufweisen, welche (zumindest) eine erste Anschlussstelle zum Anschluss an den Leergutrücknahmeautomaten und (zumindest) eine zweite Anschlussstelle zum Anschluss an den Leergut-Sammelbehälter aufweist, wobei die Leergut-Transportrohrleitung z.B. einen runden, z.B. einen zumindest im Wesentlichen kreisrunden Querschnitt, mit einem Durchmesser von z.B. in einem Bereich von ungefähr 5 cm bis ungefähr 50 cm, beispielsweise in einem Bereich von ungefähr 10 cm bis ungefähr 30 cm, beispielsweise in einem Bereich von ungefähr 15 cm bis ungefähr 25 cm, haben kann (beispielsweise kann die Leergut-Transportrohrleitung auch verschiedene Durchmesser haben, z.B. in einem Fall, in welchem mehrere Leergut-Transportrohrleitungen zusammengeführt werden). Der Querschnittsdurchmesser ist beispielsweise zu wählen abhängig von der Länge der Leergut-Transportrohrleitung, wobei gilt: je länger die Leergut-Transportrohrleitung, desto geringer sollte der Querschnittsdurchmesser gewählt werden.

Weiter kann das Leergut-Transportsystem eine Luftstrom-Erzeugungsvorrichtung (z.B. ein Gebläse, z.B. auch aus Gründen der Redundanz zwei oder mehr Gebläse, beispielsweise in Form eines Radialventilators) aufweisen, welche an die Leergut-Transportrohrleitung angeschlossen und eingerichtet ist, um in der Leergut-Transportrohrleitung einen Transport-Luftstrom bereitzustellen, mittels dessen das Leergut, das über die erste Anschlussstelle vom Leergutrücknahmeautomaten in die Leergut-Transportrohrleitung gelangt, zum Leergut-Sammelbehälter bewegbar ist. Die Luftstrom-Erzeugungsvorrichtung kann beispielsweise nahe der ersten Anschlussstelle bereitgestellt sein, um dort z.B. einen Überdruck in der Leergut-Transportrohrleitung zu erzeugen, und/oder kann nahe der zweiten Anschlussstelle bereitgestellt sein, um dort z.B. einen Unterdruck in der Leergut-Transportrohrleitung zu erzeugen. Optional können die Luftstrom-Erzeugungsvorrichtung und die Leergut-Transportrohrleitung derart eingerichtet sein, dass zumindest im Bereich der ersten Anschlussstelle(n) ein Unterdruck bezogen auf die Umgebung vorliegt. Der Unterdruck kann z.B. via Bernoulli-Effekt auf die Anschlussstelle aufgebracht werden und/oder derart, dass in der Leergut-Transportrohrleitung per se ein Unterdruck vorliegt.

Das Leergut-Transportsystem kann ferner eine Luftschleuseneinrichtung aufweisen, welche an der ersten Anschlussstelle angeordnet ist, um (z.B. direkt oder mittels Zwischenelementen wie z.B. Leergutverdichtungsvorrichtungen, Leergutkompaktierungsvorrichtungen, Förderbänder, Steigförderer, etc.) zwischen den Leergutrücknahmeautomat und die Leergut-Transportrohrleitung anschließbar zu sein, und über welche das Leergut vom Leergutrücknahmeautomaten an die Leergut-Transportrohrleitung überführbar ist, und welche wenigstens ein Luftschleusentor (z.B. eine elektrisch bzw. elektro-pneumatisch betätigte Klappe oder einen elektrisch betätigten Schieber) zur automatisch gesteuerten selektiven Abtrennung der Leergut-Transportrohrleitung vom daran angeschlossenen Leergutrücknahmeautomaten aufweist. Insofern die Luftschleuseneinrichtung im oder direkt am Leergutrücknahmeautomaten angeordnet ist, verhindert diese, dass unerwünschte Gegenstände (bspw. aus dem Bereich vor dem Leergutrücknahmeautomat) angesaugt werden. Ebenfalls reduziert die Luftschleuseneinrichtung die für den Abtransport des Leerguts erforderliche Gebläseleistung, d.h. den Transport-Luftstrom der Luftstrom-Erzeugungsvorrichtung durch Minimierung von Luftstrom-Leckageverlusten an der ersten Anschlussstelle (z.B. können Leckageverluste in der Leergut-Transportrohrleitung über eine Druckdifferenz zwischen einem Druck-Istwert und einem Druck-Sollwert in der Leergut-Transportrohrleitung erkannt werden).

Das Leergut-Transportsystem kann zudem eine automatische Steuerungsvorrichtung aufweisen, welche (zumindest) mit der Luftschleuseneinrichtung verbunden ist, um eine Öffnungs- und Schließbetätigung des wenigstens einen Luftschleusentors in Abhängigkeit von über die Leergut-Transportrohrleitung abzuführendem Leergut, das der Luftschleuseneinrichtung vom Leergutrücknahmeautomaten aus zugeführt wird, automatisch zu steuern. Die automatische Steuerung der Luftschleuseneinrichtung kann z.B. anhand des im Leergutrücknahmeautomaten erkannten Leerguts (z.B. Flasche oder Dose), einem Betriebszustand der Luftstrom-Erzeugungsvorrichtung, einem gegenwärtig in der der Leergut-Transportrohrleitung transportierten Leergut (dessen Position z.B. über Differenzdruckmessungen an verschieden Stellen der Rohrleitung ermittelbar ist), usw. durch Sensoren des Leergut-Transportsystems erfolgen. Zudem kann beispielsweise das Luftschleusentor auch kurzzeitig selektiv zum Absaugen/Ausblasen von Gerüchen, z.B. infolge von Leergut-Restflüssigkeit, aus dem Leergutrücknahmeautomaten geöffnet sein/werden, ohne dass Leergut abtransportiert wird.

Die Luftstrom-Erzeugungsvorrichtung kann derart eingerichtet sein, dass von ihr im Betrieb des Leergut-Transportsystems der Transport-Luftstrom permanent bereitgestellt wird.

Die Luftschleuseneinrichtung kann ein zweites Luftschleusentor aufweisen, wobei die Steuerungsvorrichtung eingerichtet ist, um die Öffnungs- und Schließbetätigung des ersten und des zweiten Luftschleusentors der Luftschleuseneinrichtung derart zu steuern, dass zumindest im Wesentlichen nur eines von dem ersten und dem zweiten Luftschleusentor geöffnet ist/wird, d.h., dass zumindest eines der Luftschleusentore stets geschlossen ist. Jedoch kann es beispielsweise auch sein, dass das erste und das zweite Luftschleusentor für eine vorbestimmte Zeit zumindest teilweise gleichzeitig offen sind, sodass ein (im Verhältnis zum Transport-Luftstrom geringer) Luftaustausch zwischen dem Leergutrücknahmeautomaten und der Leergut-Transportrohrleitung erfolgt, um Gerüche abzusaugen/auszublasen (zur Vorbeugung von Gerüchen können beispielsweise die Luftschleuseneinrichtung und/oder die Leergut-Transportrohrleitung mittels eines Sprühnebels gereinigt werden, z.B. aus fein verteiltem Reinigungsmittel und/oder Wasser, welches in den Transport-Luftstrom eingeleitet wird).

Die Luftschleuseneinrichtung und/oder die erste Anschlussstelle können derart ausgebildet sein, dass die Überführung des Leerguts von der Luftschleuseneinrichtung an die Leergut-Transportrohrleitung zumindest im Wesentlichen ausschließlich durch einen von der in der Leergut-Transportrohrleitung erzeugten, auf das in der Luftschleusenrichtung vorliegende Leergut wirkenden Luftströmungs-Unterdruck erfolgt, mittels dessen das Leergut von der Luftschleuseneinrichtung in die Leergut-Transportrohrleitung einsaugbar ist.

Ein Leergut-Transportsystem in Kombination mit Leergut gemäß einer beispielhaften Ausführungsform kann das oben beschriebene Leergut-Transportsystem mit einem Rohrleitungsdurchmesser der Leergut-Transportrohrleitung aufweisen, der größer ist als die größte Abmessung des Leerguts, sodass das Leergut in der Leergut-Transportrohrleitung zumindest im Wesentlichen in alle Richtungen frei bewegbar ist (z.B. translatorisch wie rotatorisch). Auf diese Weise ist es möglich, Verstopfungen in der Leergut-Transportrohrleitung durch darin verklemmtes/angestautes Leergut, beispielsweise in Kurvenabschnitten, zu verhindern. Im Gegensatz dazu ist es jedoch beispielsweise auch möglich, den Rohrleitungsdurchmesser so zu wählen, dass das Leergut mit einer Vorzugsausrichtung (z.B. im Falle von PET-Flaschen mit dem Boden voran, alternativ mit dem Verschluss voran) in der Leergut-Transportrohrleitung transportiert wird und sich dabei nur gering quer zur Transportrichtung bewegen kann und die Vorzugsausrichtung zumindest im Wesentlichen beibehält, z.B. in der Art eines Rohrpostsystems. Das heißt, die Leergut-Transportrohrleitung kann z.B. zum Transport von (offenen) Flaschen, verdichteten Flaschen (z.B. gepressten Flaschen) und/oder kompaktierten Flaschen (z.B. in mehreren Raumrichtungen gepressten Flaschen) geeignet sein.

Ein Leergut-Rücknahmesystem gemäß einer beispielhaften Ausführungsform kann aufweisen: das oben beschriebene Leergut-Transportsystem, den Leergutrücknahmeautomaten, der über die Luftschleuseneinrichtung und die erste Anschlussstelle mit der Leergut-Transportrohrleitung verbunden ist, und den Leergut-Sammelbehälter, der über die zweite Anschlussstelle mit der Leergut-Transportrohrleitung verbunden ist, wobei der Leergutrücknahmeautomat eine Leergutaufnahmeöffnung aufweist (z.B. an dessen Vorderseite), über welche Leergut (z.B. einzelne Einwegflaschen und/oder Dosen) in den Leergutrücknahmeautomaten einbringbar ist (z.B. manuell nacheinander durch einen Verbraucher).

Im Leergut-Rücknahmesystem kann die Luftschleuseneinrichtung in einem Abstand von der Leergutaufnahmeöffnung angeordnet sein (z.B. kann die Luftschleuseneinrichtung in einem hinteren und/oder unteren Bereich des Leergutrücknahmeautomaten oder außerhalb vom Leergutrücknahmeautomaten als separate Vorrichtung z.B. hinter/unter dem Leergutrücknahmeautomaten angeordnet sein) und kann der Leergutrücknahmeautomat eine Fördereinrichtung (z.B. eine Rutschbahn) haben, optional eine mechanische Fördereinrichtung (z.B. ein Transportband) haben, welche zwischen der Leergutaufnahmeöffnung und der Luftschleuseneinrichtung angeordnet ist, und mittels deren das Leergut, das über die Leergutaufnahmeöffnung in den Leergutrücknahmeautomaten eingebracht wird, automatisch zur Luftschleuseneinrichtung förderbar ist (z.B. gesteuert durch die automatische Steuerungsvorrichtung). Ebenfalls ist es möglich, dass mehrere Leergutrücknahmeautomaten gemeinsam an eine einzelne Luftschleuseneinrichtung angeschlossen sind. Dies kann z.B. realisiert werden, indem mehrere Leergutrücknahmeautomaten oder zugehörige Leergutkompaktierungsvorrichtungen mittels eines gemeinsamen Förderbands mit der Luftschleuseneinrichtung verbunden sind, derart, dass das Leergut von den Leergutrücknahmeautomaten oder den Leergutkompaktierungsvorrichtungen auf das Förderband ausgebbar ist und von diesem zur einen einzelnen Luftschleuseneinrichtung transportierbar ist.

Weiter kann im Leergut-Rücknahmesystem die Luftschleuseneinrichtung benachbart zur Leergutaufnahmeöffnung angeordnet sein (z.B. hinter und/oder unterhalb der Leergutaufnahmeöffnung), sodass Leergut über die Leergutaufnahmeöffnung unmittelbar in die Luftschleuseneinrichtung einbringbar ist (z.B. in diese hineinfällt oder rutscht), um dann mittels des Luftströmung-Unterdrucks in die Leergut-Transportrohrleitung gesaugt zu werden. Das heißt, die Fördereinrichtung des Leergutrücknahmeautomaten kann weggelassen werden und der Leergutrücknahmeautomat kann einfacher und platzsparender gestaltet sein.

Zudem kann das Leergut-Rücknahmesystem mehrere, z.B. zwei, drei, vier, fünf, sechs, sieben, acht oder mehr Leergutrücknahmeautomaten aufweisen (z.B. gleichartige Automaten oder z.B. voneinander verschiedene Automaten, von welchen jeder eine bestimmte Sorte Leergut zurücknehmen kann, beispielsweise Flaschen oder Dosen), welche mittels einer jeweiligen ersten Anschlussstelle und Luftschleuseneinrichtung mit der Leergut-Transportrohrleitung verbunden sind. Beispielsweise ist es auch möglich, dass mehrere Leergutrücknahmeautomaten eine erste Anschlussstelle und eine Luftschleuseneinrichtung gemeinsam verwenden. Zudem kann das Leergut-Transportsystem des Leergut-Rücknahmesystems auch redundant ausgeführt sein, z.B. als zwei separate Leergut-Transportsysteme, d.h., z.B. zwei voneinander unabhängige Leergut-Transportsysteme können mit einem (oder mehr) Leergutrücknahmeautomaten verbunden sein.

Darüber hinaus kann das Leergut-Rücknahmesystem einen Leergut-Kompaktierer zum Kompaktieren des dem Leergutrücknahmeautomaten zugeführten Leerguts durch Verdichten (z.B. Pressen), Kompaktieren (z.B. mehrfaches Pressen in verschiedenen Raumrichtungen) und/oder Zerkleinern des Leerguts aufweisen. Beispielsweise kann das Leergut einzeln, d.h. einzelne Flaschen oder Dosen, oder gesammelt gepresst und/oder zerteilt (z.B. geschreddert oder zerschnitten) werden, um die Abmessungen und/oder das Gewicht des Leerguts für den Transport in der Leergut-Transportrohrleitung zu reduzieren/verteilen. Dies kann erlauben, dass der Rohrleitungsdurchmesser kleiner dimensioniert sein kann und/oder die Luftstrom-Erzeugungsvorrichtung schwächer dimensioniert sein kann als verglichen mit dem Fall des nicht kompaktierten Leerguts. Zudem kann der im Leergut-Sammelbehälter vorhandene Raum durch eine höhere Packungsdichte des Leerguts darin besser genutzt werden.

Außerdem kann im Leergut-Rücknahmesystem der Leergut-Kompaktierer (oder z.B. ein weiterer Leergut-Kompaktierer) zwischen der Leergutaufnahmeöffnung des Leergutrücknahmeautomaten und der Luftschleuseneinrichtung oder zwischen der zweiten Anschlussstelle der Leergut-Transportrohrleitung und dem Leergut-Sammelbehälter angeordnet sein, sodass für mehrere Leergutrücknahmeautomaten nur ein einzelner Leergut-Kompaktierer erforderlich ist, was die Kosten und den Platzbedarf senkt.

Das Luftschleusentor der Luftschleuseneinrichtung (welche in diesem Fall z.B. als Drehschleuse bzw. Rotationsschleuse bezeichnet wird) kann z.B. durch eine drehbare, einseitig radial zur Drehachse offene Luftschleusenkammerwand gebildet sein, von welcher eine Luftschleusenkammer begrenzt ist (z.B. bildet die Luftschleusenkammerwand einen radial einseitig offenen Hohlzylinder mit verschlossenen Längsrichtungsenden), wobei die Luftschleusenkammer mittels der radialen Öffnung selektiv durch Drehung der Luftschleusenkammerwand mit der Leergut-Transportrohrleitung und dem daran angeschlossenen Leergutrücknahmeautomaten verbindbar ist. Hierzu ist das Luftschleusentor derart gestaltet, dass die radiale Öffnung der Luftschleusenkammerwand nicht gleichzeitig mit der Luftschleusenkammerwand und der Leergut-Transportrohrleitung und dem Leergutrücknahmeautomaten in Verbindung treten kann.

Eine weitere mögliche Ausgestaltung der Luftschleuseneinrichtung kann in Art einer Trommel eines Revolvers erfolgen. Hierzu können z.B. in einem um eine Drehachse herum drehbaren Trommelkörper mehrere (z.B. zwei, drei, vier fünf oder mehr) Kammern vorgesehen sein, welche in Richtung der Drehachse (Axialrichtung) offen sind und zur Aufnahme des Leerguts geeignet sind. Der Trommelkörper ist in der Axialrichtung durch zwei feststehende Platten begrenzt und relativ zu diesen drehbar (z.B. durch einen Elektromotor angetrieben, welcher z.B. durch die Steuerungsvorrichtung selektiv steuerbar ist). Die zwei Platten haben jeweils ein Durchgangsloch, welche von der Drehachse des Trommelkörpers im Abstand sind und nicht zueinander korrespondieren, d.h. zumindest im Wesentlichen nicht überlappen. Eines der Löcher ist ein Eingabeloch, durch welches das Leergut vom Leergutrücknahmeautomaten in eine der Kammern hinein eingebbar ist, und das andere Loch ist ein Ausgabeloch, durch welches das Leergut aus einer der Kammern in die Leergut-Transportrohrleitung ausgebbar ist. Folglich ist durch das selektive Drehen des Trommelkörpers jeweils eine Kammer unter das Eingabeloch bewegbar, um Leergut aufzunehmen, und anschließend zum Ausgabeloch bewegbar, um das Leergut auszugeben. Auf diese Art sind die für die Rotationsschleuse beschriebenen Effekte ebenfalls erreichbar.

Das Leergut-Transportsystem kann mehrere zweite Anschlussstellen mit einem zugehörigen Verschlussmechanismus, welcher mit der Steuerungsvorrichtung verbunden ist, zum Anschluss an voneinander verschiedene Leergut-Sammelbehälter aufweisen, wobei die Steuerungsvorrichtung den jeweiligen Verschlussmechanismus derart steuert, dass das Leergut von der Leergut-Transportrohrleitung selektiv an einen der Leergut-Sammelbehälter übergebbar ist. Beispielsweise können unterschiedliche Leergutchargen (z.B. Kunststoffflaschen oder Aluminiumgetränkedosen) in verschiedene Sammelbehälter dadurch ausgegeben werden, dass nur der zum gegenwärtig in der Leergut-Transportrohrleitung transportierten Leergut korrespondiere Leergut-Sammelbehälter durch einen offenen Verschlussmechanismus mit der Leergut-Transportrohrleitung verbunden ist.

Zudem kann die Steuerungsvorrichtung weiter eingerichtet sein, um die Luftstrom-Erzeugungsvorrichtung in Abhängigkeit von einem Anforderungssignal zu steuern, welches z.B. von einem Sensor des Leergut-Transportsystems, der im Leergutrücknahmeautomaten und/oder in der Luftschleuseneinrichtung angeordnet ist, ausgegeben wird, sodass in der Leergut-Transportrohrleitung der Transport-Luftstrom nur auf Anforderung bereitgestellt wird/wirkt. Das heißt, das Leergut-Transportsystem ist z.B. zyklisch (d.h. mit Betriebspausen) betreibbar. Dies hält den Energieverbrauch niedrig und minimiert eine Lärmerzeugung. Ein derartiges Anforderungssignal kann z.B. erzeugt und an die Steuerungsvorrichtung übertragen werden, wenn dem Leergutrücknahmeautomaten Leergut durch die Leergutaufnahmeöffnung eingegeben wird oder wenn die Luftschleuseneinrichtung zu einem bestimmten Grad mit Leergut (z.B. nicht kompaktiertem, kompaktiertem oder verdichtetem Leergut, etc.) gefüllt ist.

Ausführungsbeispiele der Erfindung sind in den Figuren dargestellt und werden im Folgenden näher erläutert.

Es zeigen:
- Figur 1: ein schematisches Leergut-Transportsystem und ein schematisches Leergut-Rücknahmesystem gemäß einer Ausführungsform;
- Figur 2: eine Anordnung eines Leergutrücknahmeautomaten, eines Leergut-Kompaktierers, einer Luftschleuseneinrichtung und einer Leergut-Transportrohrleitung gemäß der in der Figur 1 gezeigten Ausführungsform; und
- Figur 3: eine weitere Anordnung eines Leergutrücknahmeautomaten, einer Luftschleuseneinrichtung und einer Leergut-Transportrohrleitung gemäß der in der Figur 1 gezeigten Ausführungsform.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne vom Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen", "gekuppelt" und ähnliches verwendet zum Beschreiben sowohl einer direkten als auch einer indirekten Verbindung, eines direkten oder indirekten Anschlusses sowie einer direkten oder indirekten Kupplung. In den Figuren werden identische oder ähnliche Elemente mit identischen Bezugszeichen versehen, soweit dies zweckmäßig ist.

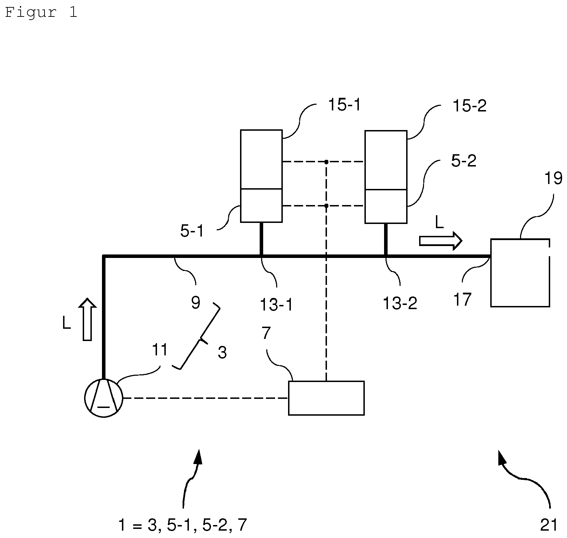

In der Figur 1 ist ein schematisches Leergut-Transportsystem 1 mit einer Luftstrom-Transportvorrichtung 3, zwei Luftschleuseneinrichtungen 5-1 und 5-2 sowie einer automatischen Steuerungsvorrichtung 7 gezeigt. Die Luftstrom-Transportvorrichtung 3 ist aus einer Leergut-Transportrohrleitung 9 und einer Luftstrom-Erzeugungsvorrichtung 11 gebildet und hat zwei erste Anschlussstellen 13-1 und 13-2 zum Anschluss (mittels der zugehörigen Luftschleuseneinrichtung 5-1 bzw. 5-2) eines jeweiligen Leergutrücknahmeautomaten 15-1 und 15-2 sowie eine zweite Anschlussstelle 17 für einen Leergut-Sammelbehälter 19. Die Gesamtheit der in der Figur 1 gezeigten Komponenten bildet ein Leergut-Rücknahmesystem 21. Beispielsweise können einige Komponenten des Leergut-Transportsystems, z.B. die Luftstrom-Erzeugungsvorrichtung 11 und ein (weiter unten beschriebener) Leergut-Kompaktierer, auf einem Dach der Leergutrücknahmestelle angeordnet sein.

Die Leergut-Transportrohrleitung 9 ist eine Rohrleitung, in welcher von der Luftstrom-Erzeugungsvorrichtung 11 ein Luftstrom L erzeugt wird, der zumindest ausgehend von stromaufwärts der beiden ersten Anschlussstellen 13-1 und 13-2 bis zur zweiten Anschlussstelle 17 wirkt. Hierzu ist die Luftstrom-Erzeugungsvorrichtung 11 mit einem Ende der Leergut-Transportleitleitung 9 verbunden, das sich stromaufwärts der beiden ersten Anschlussstellen 13-1 und 13-2 befindet. In dieser Ausführungsform ist die Luftstrom-Erzeugungsvorrichtung 11 ein Radialventilator, welcher einen Volumenstrom in einem Bereich von ungefähr 150 m³/h bis ungefähr 350 m³/h, beispielsweise in einem Bereich von ungefähr 200 m³/h bis ungefähr 300 m³/h, beispielsweise von ungefähr 250 m³/h bereitstellt. Die Leergut-Transportrohrleitung 9 kann einen Durchmesser in einem Bereich von ungefähr 5 cm bis ungefähr 50 cm, beispielsweise in einem Bereich von ungefähr 10 cm bis ungefähr 30 cm, beispielsweise in einem Bereich von ungefähr 15 cm bis ungefähr 25 cm, haben.

Das Leergut-Transportsystem 1 und das Leergut-Rücknahmesystem 21 sind aus Gründen der Übersichtlichkeit im Folgenden nur mit einem einzelnen daran angeschlossenen Leergutrücknahmeautomaten 15, einer einzelnen Luftschleuseneinrichtung 5 und einer einzelnen ersten Anschlussstelle 13 beschrieben, wobei wie aus der Figur 1 ersichtlich zwei Leergutrücknahmeautomaten 15-1 und 15-2 am Leergut-Transportsystem 1 angeschlossen sind. Weitere Ausführungsformen mit nur einem Leergutrücknahmeautomaten oder mehr als zwei, bspw. drei, vier, fünf, sechs, sieben, acht oder mehr, Leergutrücknahmeautomaten ergeben sich analog. Zudem steht in der folgenden Beschreibung der Begriff "Leergut" gleichsam für einen einzelnen Getränkebehälter (z.B. eine einzelne Einwegflasche oder Getränkedose), eine Ansammlung von Getränkebehältern oder für Teile (z.B. Hackschnitzel / gemeinsam zusammengepresste Getränkebehälter) davon, wobei sich aus dem Kontext die konkrete Gestalt des Leerguts ergibt.

An der ersten Anschlussstelle 13 ist die Luftschleuseneinrichtung 5 mit der Leergut-Transportrohrleitung 9 verbunden, um vom (weiter unten im Detail beschriebenen) Leergutrücknahmeautomaten 15 Leergut 31 zu empfangen. Die Übergabe des Leerguts 31 von der Luftschleuseneinrichtung 5 an die Leergut-Transportrohrleitung 9 ist von der Steuerungsvorrichtung 7 gesteuert, welche mit der Luftstrom-Erzeugungsvorrichtung 11, dem Leergutrücknahmeautomaten 15 und der Luftschleuseneinrichtung 5 verbunden ist. Zur Steuerung erhält die Steuerungsvorrichtung 7 von den bezeichneten Komponenten, d.h. von diesen zugehörigen Sensoren, z.B. Informationen über einen Betriebszustand der Luftstrom-Erzeugungsvorrichtung 11, einen Leerguttyp (bspw. Flasche oder Dose), eine Leergutmenge, usw. und steuert zumindest die Luftschleuseneinrichtung 5 entsprechend.

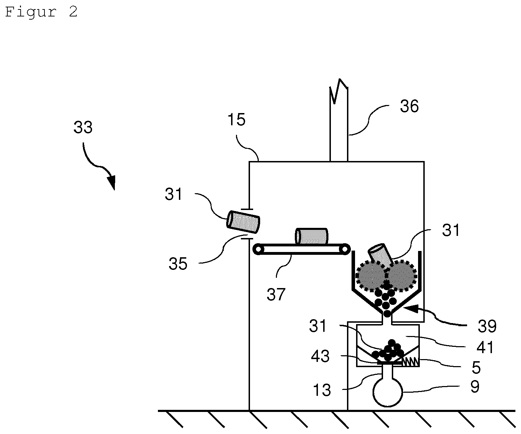

In der Figur 2 sind der Leergutrücknahmeautomat 15 und die Luftschleuseneinrichtung 5 gemäß einer beispielhaften Ausführungsform im Bereich der ersten Anschlussstelle 13 schematisch dargestellt. In der weiteren Beschreibung des Leergutrücknahmeautomaten 15 sind bestimmte Elemente, beispielsweise eine Erkennungsvorrichtung für das Leergut und eine Wertbon-Ausgabevorrichtung des Leergutrücknahmeautomaten, weggelassen.

Der Leergutrücknahmeautomat 15 ist in einem Automatenraum 33 einer Leergutrücknahmestelle (z.B. einem Super- oder Getränkemarkt) aufgestellt, sodass Verbraucher an einer Vorderseite des Leergutrücknahmeautomaten 15 durch eine dort vorgesehene Leergutaufnahmeöffnung 35 Leergut 31 in den Leergutrücknahmeautomaten 15 einführen und somit zurückgeben können. Gewöhnlich ist der Leergutrücknahmeautomat 15 so aufgestellt, dass zumindest dessen Rückseite räumlich vom Automatenraum 33 getrennt ist, z.B. durch eine Wand 36. An der Rückseite des Leergutrücknahmeautomaten 15 (d.h. hinter der Wand 36) wird die Handhabung des Leerguts 31 durchgeführt, sodass Lärm und Gerüche durch die Leerguthandhabung vom Automatenraum 33 ferngehalten werden.

Der Leergutrücknahmeautomat 15 weist weiter eine Fördereinrichtung 37 und einen Leergut-Kompaktierer 39 auf. Die Fördereinrichtung 37 ist hier ein Förderband, welches sich von der Leergutaufnahmeöffnung 35 zum Leergut-Kompaktierer 39 erstreckt, der in einem hinteren Teil des Leergutrücknahmeautomaten 15 integriert ist (der Leergut-Kompaktierer 39 kann auch als vom Leergutrücknahmeautomaten 15 separate Vorrichtung ausgeführt sein). Der Leergut-Kompaktierer 39 dient, um über die Leergutaufnahmeöffnung 35 von der Fördereinrichtung 37 zugeführtes Leergut 31 zu kompaktieren. In diesem Fall ist der Leergut-Kompaktierer 39 als ein Schredder ausgeführt, welcher das Leergut 31, d.h. einzelne Getränkebehälter separat im Takt ihrer Annahme oder mehrere Getränkebehälter gemeinsam, in Hackschnitzel zerteilt, z.B. um eine Verstopfung der Leergut-Transportrohrleitung 9 zu verhindern. Andererseits kann der Leergut-Kompaktierer 39 auch als eine Presse ausgeführt sein, welche das Leergut 31 nur zusammenpresst (z.B. verdichtet/kompaktiert), oder aus einer Kombination aus beiden.

Das im Leergut-Kompaktierer 39 zerkleinerte Leergut 31 wird hier an einer hinteren, unteren Seite (oder anderen zweckmäßigen Seite) des Leergutrücknahmeautomaten 15 ausgegeben und von der Luftschleuseneinrichtung 5 empfangen. Hierzu weist die Luftschleuseneinrichtung 5 eine darin gebildete Luftschleusenkammer 41 sowie ein Luftschleusentor 43 auf, welches die Luftschleusenkammer 41 von der Leergut-Transportrohrleitung 9 durch die Steuerungsvorrichtung 7 gesteuert selektiv trennt und mit dieser verbindet. Das Luftschleusentor 43 ist beispielsweise als ein federkraftbelasteter Schieber ausgeführt, welcher durch einen Pneumatikzylinder geöffnet wird, oder wird (ohne Feder) von einem Elektromotor oder anderen Aktuatoren (z.B. Pneumatikaktuatoren) betätigt. Somit wird der Leergutrücknahmeautomat 15 über die Luftschleusenkammer 41 ebenfalls von der Leergut-Transportrohrleitung 9 selektiv getrennt oder mit dieser verbunden. Wenn in der Luftschleusenkammer 41 befindliches Leergut 31 (z.B. eine einzelne zerkleinerte Flasche oder mehrere zerkleinerte Flaschen) der Leergut-Transportrohrleitung 9 übergeben werden soll, steuert die Steuerungsvorrichtung 7 das Luftschleusentor 43, um für einen bestimmten Zeitraum geöffnet zu sein, sodass das Leergut 31 in die Leergut-Transportrohrleitung 9 durch den darin herrschenden Luftstrom L hineingesogen wird (z.B. auch durch die Schwerkraftwirkung unterstützt). Gleichzeitig werden Gerüche im Leergutrücknahmeautomat 15 ebenfalls mit abgezogen. Um ein exzessives Abziehen von Luft aus dem Leergutrücknahmeautomaten 15 (und/oder dem Automatenraum 33) zu verhindern, kann die Luftschleuseneinrichtung 5 mit einem weiteren Luftschleusentor (nicht gezeigt) ausgestattet sein, welches die Luftschleusenkammer 41 zum Leergutrücknahmeautomaten 15 hin begrenzt und welches (zumindest teilweise) geschlossen ist, wenn das andere Luftschleusentor 43 geöffnet ist.

Das in die Leergut-Transportrohrleitung 9 eingegebene Leergut 31 wird vom darin herrschenden Luftstrom L mitgetragen und zum Leergut-Sammelbehälter 19 transportiert (vgl. Figur 1). Der Leergut-Rohrleitungsdurchmesser ist auf das Leergut 31 abgestimmt, d.h. auf die Größe und die Form des Leerguts 31, sodass sich das Leergut 31 in der Leergut-Transportrohrleitung 9 im Transport-Luftstrom L frei (translatorisch sowie rotatorisch) bewegen kann. Bogen-/ Kurvenabschnitte, weitere (erste und/oder zweite) Anschlussstellen, Verzweigungen, etc. in der Leergut-Transportrohrleitung 9 sind so ausgeführt, dass ein Leergutstau / eine Leergutverstopfung vermieden wird.

Nach dem Transport des Leerguts 31 in der Leergut-Transportrohrleitung 9 wird das Leergut 31 (Hackschnitzel) über die zweite Anschlussstelle 17 in den Leergut-Sammelbehälter 19 eingegeben. Dazu ist der Leergut-Sammelbehälter 19 zumindest im Wesentlichen an einem oberen Bereich davon an die Leergut-Transportrohrleitung 9 gekuppelt, sodass das Leergut 31 in den Leergut-Sammelbehälter 19 eingeblasen wird und dort verbleibt, während überschüssige Luft des Transport-Luftstroms L aus dem Leergut-Sammelbehälter 19 entweicht. Auf diese Art kann der Leergut-Sammelbehälter 19 kontinuierlich mit einer hohen Packungsdichte gefüllt werden.

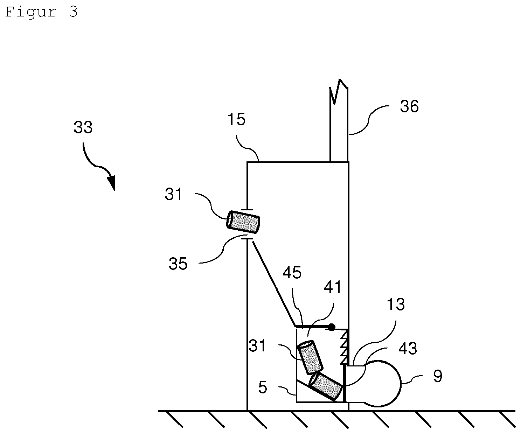

In der Figur 3 sind der Leergutrücknahmeautomat 15 und die Luftschleuseneinrichtung 5 gemäß einer weiteren beispielhaften Ausführungsform im Bereich der ersten Anschlussstelle 13 schematisch dargestellt. Das Leergut-Transportsystem 1 und das Leergut-Rücknahmesystem 21 entsprechen grundsätzlich denen aus der Figur 1, wobei die Leergut-Transportrohrleitung 9 aufgrund der Anpassung an die Leergutgröße (siehe weiter unten) einen größeren Leergut-Transportrohrleitungsdurchmesser haben kann, beispielsweise in einem Bereich von ungefähr 5 cm bis ungefähr 50 cm, beispielsweise in einem Bereich von ungefähr 10 cm bis ungefähr 30 cm, beispielsweise in einem Bereich von ungefähr 15 cm bis ungefähr 25 cm, haben kann (beispielsweise kann die Leergut-Transportrohrleitung auch verschiedene Durchmesser haben, z.B. in einem Fall, in welchem mehrere Leergut-Transportrohrleitungen zusammengeführt werden).

Der in der Figur 3 gezeigte Leergutrücknahmeautomat 15 entspricht grundsätzlich jenem, welcher in der Figur 2 gezeigt ist, jedoch hat der Leergutrücknahmeautomat 15 dieser Ausführungsform keine Fördereinrichtung und auch keinen Leergut-Kompaktierer. Hier wird das Leergut 31 durch den Verbraucher durch die Leergutaufnahmeöffnung 35 in den Leergutrücknahmeautomaten 15 eingegeben und fällt direkt (unkompaktiert oder unzerkleinert) in die Luftschleuseneinrichtung 5, welche innerhalb des Leergutrücknahmeautomaten 15 hinten unten angeordnet ist (jedoch kann die Luftschleuseneinrichtung 5 auch als vom Leergutrücknahmeautomaten 15 separate Vorrichtung ausgeführt sein). Bei dieser Gestaltung des Leergutrücknahmeautomaten 15 kann dieser z.B. einfach und kompakt gebaut werden. Zudem kann aus dem intakten Leergut z.B. weniger Restflüssigkeit austreten, verglichen mit dem kompaktierten Leergut, was eine Geruchsbelästigung reduzieren kann. Nichtsdestotrotz kann ein einzelner Leergut-Kompaktierer am Leergut-Sammelbehälter 19 oder irgendwo im Verlauf der Leergut-Transportrohrleitung 9, z.B. auf dem Dach der Leergutrücknahmestelle, bereitgestellt sein, um das Leergut 31 direkt am Leergut-Sammelbehälter 19 oder irgendwo im Verlauf der Leergut-Transportrohrleitung 9 zu kompaktieren. Allgemein kann die Leergut-Transportrohrleitung 9 Bearbeitungszentren, z.B. Bereiche mit Leergutrücknahmeautomaten, Leergut-Kompaktierer, etc., und Ausschleusungsbereiche, z.B. Ausschleusungsvorrichtungen zu Sammelbehältern, durchlaufen bzw. miteinander verbinden.

Die Luftschleuseneinrichtung 5 des Leergutrücknahmeautomaten 15 dieser Ausführungsform hat eine darin gebildete Luftschleusenkammer 41 sowie ein erstes Luftschleusentor 43, welches die Luftschleusenkammer 41 von der Leergut-Transportrohrleitung 9 durch die Steuerungsvorrichtung 7 selektiv gesteuert trennt und mit dieser verbindet, und ein zweites Luftschleusentor 45, welches durch die Steuerungsvorrichtung 7 gesteuert die Luftschleusenkammer 41 selektiv mit dem Leergutrücknahmeautomaten 15 (der Leergutaufnahmeöffnung 35) verbindet. Wenn in der Luftschleusenkammer 41 befindliches Leergut 31 (z.B. eine oder mehrere Getränkedosen) der Leergut-Transportrohrleitung 9 übergeben wird, dann steuert die Steuerungsvorrichtung 7 das Luftschleusentor 43, um für einen bestimmten Zeitraum geöffnet zu sein, sodass das Leergut 31 in die Leergut-Transportrohrleitung 9 durch den darin herrschenden Luftstrom L hineingesogen wird. Gleichzeitig steuert die Steuerungsvorrichtung 7 das zweite Luftschleusentor 45, um (zumindest im Wesentlichen) geschlossen zu sein, sodass ein exzessives Luftansaugen der Luft aus dem Leergutrücknahmeautomaten 15 und/oder des Automatenraums 33 nicht erfolgt.

## Patentansprüche

1. Leergut-Transportsystem (1) zum automatischen Transport von Leergut (31) von einem Leergutrücknahmeautomaten (15) zu einem Leergut-Sammelbehälter (19), mit:
• einer Luftstrom-Transportvorrichtung (3), welche aufweist eine Leergut-Transportrohrleitung (9), welche eine erste Anschlussstelle (13) zum Anschluss an den Leergutrücknahmeautomaten (15) und eine zweite Anschlussstelle (17) zum Anschluss an den Leergut-Sammelbehälter (19) aufweist, und eine Luftstrom-Erzeugungsvorrichtung (11), welche an die Leergut-Transportrohrleitung (9) angeschlossen und eingerichtet ist, um in der Leergut-Transportrohrleitung (9) einen Transport-Luftstrom (L) bereitzustellen, mittels dessen das Leergut (31), das über die erste Anschlussstelle (13) vom Leergutrücknahmeautomaten (15) in die Leergut-Transportrohrleitung (9) gelangt, zum Leergut-Sammelbehälter (19) bewegbar ist,
• einer Luftschleuseneinrichtung (5), welche an der ersten Anschlussstelle (13) angeordnet ist, um zwischen den Leergutrücknahmeautomat (15) und die Leergut-Transportrohrleitung (9) anschließbar zu sein, und über welche das Leergut (31) vom Leergutrücknahmeautomaten (15) an die Leergut-Transportrohrleitung (9) überführbar ist, und welche wenigstens ein Luftschleusentor (43; 45) zur automatisch gesteuerten selektiven Abtrennung der Leergut-Transportrohrleitung (9) und dem daran angeschlossenen Leergutrücknahmeautomaten (15) aufweist, und
• einer automatischen Steuerungsvorrichtung (7), welche mit der Luftschleuseneinrichtung (5) verbunden ist, um eine Öffnungs- und Schließbetätigung des wenigstens einen Luftschleusentors (43; 45) in Abhängigkeit von über die Leergut-Transportrohrleitung (9) abzuführendem Leergut (31), das der Luftschleuseneinrichtung (5) vom Leergutrücknahmeautomaten (15) aus zugeführt wird, automatisch zu steuern.

2. Leergut-Transportsystem (1) gemäß Anspruch 1, wobei die Luftstrom-Erzeugungsvorrichtung (11) derart eingerichtet ist, dass von ihr im Betrieb des Leergut-Transportsystems (1) der Transport-Luftstrom (L) permanent bereitgestellt ist.

3. Leergut-Transportsystem (1) gemäß irgendeinem der vorhergehenden Ansprüche, wobei die Luftschleuseneinrichtung (5) ein zweites Luftschleusentor (45) hat, und wobei die Steuerungsvorrichtung (7) eingerichtet ist, um die Öffnungs- und Schließbetätigung des ersten und des zweiten Luftschleusentors (43, 45) der Luftschleuseneinrichtung (5) derart zu steuern, dass zumindest im Wesentlichen nur eines von dem ersten und dem zweiten Luftschleusentor (43, 45) geöffnet wird.

4. Leergut-Transportsystem (1) gemäß irgendeinem der vorhergehenden Ansprüche, wobei die Luftschleuseneinrichtung (5) und/oder die erste Anschlussstelle (13) derart ausgebildet sind/ist, dass die Überführung des Leerguts (31) von der Luftschleuseneinrichtung (5) an die Leergut-Transportrohrleitung (9) zumindest im Wesentlichen ausschließlich durch einen von der in der Leergut-Transportrohrleitung (9) erzeugten, auf das in der Luftschleusenrichtung (5) vorliegende Leergut (31) wirkenden Luftströmungs-Unterdruck erfolgt, mittels dessen das Leergut (31) von der Luftschleuseneinrichtung (5) in die Leergut-Transportrohrleitung (9) einsaugbar ist.

5. Leergut-Transportsystem (1) gemäß irgendeinem der vorhergehenden Ansprüche in Kombination mit Leergut (31), wobei die Leergut-Transportrohrleitung (9) einen Rohrleitungsdurchmesser hat, der größer ist als die größte Abmessung des Leerguts (31), sodass das Leergut (31) in der Leergut-Transportrohrleitung (9) zumindest im Wesentlichen in alle Richtungen frei bewegbar ist.

6. Leergut-Rücknahmesystem (21) mit
• einem Leergut-Transportsystem (1) gemäß irgendeinem der vorhergehenden Ansprüche,
• einem Leergutrücknahmeautomat (15), der über die Luftschleuseneinrichtung (5) und die erste Anschlussstelle (13) mit der Leergut-Transportrohrleitung (9) verbunden ist, und
• einem Leergut-Sammelbehälter (19), der über die zweite Anschlussstelle (17) mit der Leergut-Transportrohrleitung (9) verbunden ist,
wobei der Leergutrücknahmeautomat (15) eine Leergutaufnahmeöffnung (35) aufweist, über welche Leergut (31) in den Leergutrücknahmeautomaten (15) einbringbar ist.

7. Leergut-Rücknahmesystem (21) gemäß Anspruch 6, wobei die Luftschleuseneinrichtung (5) in einem Abstand von der Leergutaufnahmeöffnung (35) angeordnet ist und wobei der Leergutrücknahmeautomat (15) eine Fördereinrichtung (37) hat, optional eine mechanische Fördereinrichtung hat, welche zwischen der Leergutaufnahmeöffnung (35) und der Luftschleuseneinrichtung (5) angeordnet ist, und mittels deren das Leergut (31), das über die Leergutaufnahmeöffnung (35) in den Leergutrücknahmeautomaten (15) eingebracht wird, automatisch zu der Luftschleuseneinrichtung (5) förderbar ist.

8. Leergut-Rücknahmesystem (21) gemäß Anspruch 6, sofern in Kombination mit Anspruch 4, wobei die Luftschleuseneinrichtung (5) benachbart zur Leergutaufnahmeöffnung (35) angeordnet ist, sodass Leergut (31) über die Leergutaufnahmeöffnung (35) unmittelbar in die Luftschleuseneinrichtung (5) einbringbar ist, um dann mittels des Luftströmung-Unterdrucks in die Leergut-Transportrohrleitung (9) gesaugt zu werden.

9. Leergut-Rücknahmesystem (21) gemäß irgendeinem der Ansprüche 6 bis 8, wobei mehrere Leergutrücknahmeautomaten (15-1, 15-2) mittels einer jeweiligen ersten Anschlussstelle (13-1, 13-2) mit der Leergut-Transportrohrleitung (9) verbunden sind.

10. Leergut-Rücknahmesystem (21) gemäß irgendeinem der Ansprüche 6 bis 9, ferner aufweisend einen Leergut-Kompaktierer (39) zum Kompaktieren des dem Leergutrücknahmeautomaten (15) zugeführten Leerguts (31) durch Verdichten und/oder Zerkleinern des Leerguts (31).

11. Leergut-Rücknahmesystem (21) gemäß Anspruch 10, wobei der Leergut-Kompaktierer (39) zwischen der Leergutaufnahmeöffnung (35) des Leergutrücknahmeautomaten (15) und der Luftschleuseneinrichtung (5) angeordnet ist oder zwischen der zweiten Anschlussstelle (17) der Leergut-Transportrohrleitung (9) und dem Leergut-Sammelbehälter (19) angeordnet ist.
